(19) Europäisches Patentamt
European Patent Office
Office européen des brevets

(11) Veröffentlichungsnummer : **0 658 595 A1**

# (12) EUROPÄISCHE PATENTANMELDUNG

(21) Anmeldenummer : **94810701.6**

(22) Anmeldetag : **06.12.94**

(51) Int. Cl.[6] : **C08K 13/02,** // (C08K13/02, 3:16, 5:57)

(30) Priorität : **14.12.93 CH 3735/93**

(43) Veröffentlichungstag der Anmeldung :
**21.06.95 Patentblatt 95/25**

(84) Benannte Vertragsstaaten :
**AT BE CH DE ES FR GB IT LI NL PT SE**

(71) Anmelder : **CIBA-GEIGY AG**
**Klybeckstrasse 141**
**CH-4002 Basel (CH)**

(72) Erfinder : **Kaufhold, Johannes**
**Am Buchacker 2**
**D-64678 Lindenfels (DE)**
Erfinder : **Sander, Hans-Jürgen**
**Magnolienstrasse 25**
**D-64653 Lorsch (DE)**

## (54) Stabilisator für chlorhaltige Polymere.

(57) Stabilisatorzusammensetzung für chlorhaltige Polymere und chlorhaltige Polymerzusammensetzungen, enthaltend

a) mindestens eine organische Zinnoxidverbindung der Formel

$$(R_aSnO_b)_c \quad (I),$$

wobei R $C_1$-$C_{18}$-Alkyl bedeutet ; a die Zahl 1 oder 2 ; b = (4-a)/2 ;
und c grösser oder gleich 1 ist ;
und

b) mindestens eine Perchlorat-Verbindung eines ein- oder zweiwertigen Metalles.

Bevorzugt werden solche Polymerzusammensetzungen für Aussenanwendungen eingesetzt.

EP 0 658 595 A1

Jouve, 18, rue Saint-Denis, 75001 PARIS

Die Erfindung betrifft eine neue Stabilisatorkombination für chlorhaltige Polymere, ein Verfahren zum Stabilisieren von chlorhaltigen Polymeren, die so erhältlichen chlorhaltigen Polymere und die Verwendung der stabilisierten Polymere.

Organozinnverbindungen, wie Organozinnalkoholate, -carboxylate, -mercaptide, -oxide oder -sulfide werden verschiedentlich als Stabilisatoren oder Costabilisatoren für chlorhaltige Polymere vorgeschlagen.

Organozinnoxide werden in Kombination mit weiteren Verbindungen eingesetzt. Aus den US-A-3,196,129 und 3,919,165 sind Kombinationen mit Thiophosphaten, -acetalen oder Phenolen bekannt. Kombinationen mit Organozinnmercaptiden werden beispielsweise in DE-A-18 06 494 beschrieben.

Die bekannten Stabilisatoren und Stabilisatorgemische können in den Polymeren nicht allen gestellten Anforderungen entsprechen. So bewirken die sehr breit eingesetzten Organozinnmaleate, als bevorzugte Organozinncarboxylate, eine hohe Klebeneigung der Polymerschmelze an den Metallteilen der Verarbeitungsmaschinen, was durch erhöhte Gleitmittelzugaben kompensiert werden muss. Andere schwefelfreie Organozinnverbindungen haben gegenüber den Maleaten eine deutlich schlechtere thermostabilisierdende Wirkung. Auch Organozinnoxide zeigen diesen Nachteil, der sich insbesondere bei Extrusion und Spritzguss unter höheren Temperaturen bemerkbar macht. Schwefelhaltige Organozinnverbindungen beeinflussen häufig die Lichtstabilität der Werkstoffe nachteilig, was eine Verwendung im Aussenbereich erschwert.

Es bestand daher die Aufgabe ein Stabilisatorsystem zu finden, das die Verarbeitung chlorhaltiger Polymere unter hoher thermischer und frikativer Belastung ermöglicht. Das betrifft vorzugsweise Prozesse wie Extrusion und Spritzguss.

Überraschenderweise erfüllt eine Stabilisatorkombination aus einer Organozinnoxid-Verbindung und einer Perchlorat-Verbindung eines ein- oder zweiwertigen Metalles in hohem Masse die Anforderungen. Neben einer guten Thermo- und Lichtstabilität werden auch die mechanischen Eigenschaften des chlorhaltigen Polymers günstig beeinflusst.

Erfindungsgemäss ist daher eine Stabilisatorzusammensetzung, enthaltend:

a) mindestens eine organische Zinnoxidverbindung der Formel

$$(R_aSnO_b)_c \qquad (I),$$

wobei R $C_1$-$C_{18}$-Alkyl bedeutet; a die Zahl 1 oder 2; b = (4-a)/2; und c grösser oder gleich 1 ist;

und

b) mindestens eine Perchlorat-Verbindung eines ein- oder zweiwertigen Metalles.

Die Komponenten a) bzw. b) können auch in Form von Mischungen vorliegen.

Die erfindungsgemässen Stabilisatorzusammensetzungen können weitere Komponenten enthalten. Die erfindungsgemässen Stabilisatorzusammensetzungen sind jedoch vorzugsweise frei von weiteren Organozinnverbindungen.

Bedeuten Substituenten Alkyl mit bis zu 18 Kohlenstoffatomen, so kommen hierfür die Reste wie Methyl, Ethyl, Propyl, Butyl, Pentyl, Hexyl, Octyl, Decyl, Dodecyl, Tetradecyl, Hexadecyl und Octadecyl sowie entsprechende verzweigte Isomere in Frage.

Als chlorhaltige Polymere können beispielsweise aufgezählt werden: Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenechlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadiens und deren Copolymere mit Vinylchlorid, Gummi-Hydrochlorid und chloriertes Gummi-Hydrochlorid; sowie Mischungen der genannten Polymere unter sich oder mit anderen polymerisierbaren Verbindungen.

Ferner sind umfasst die Pfropfpolymerisate von PVC mit EVA, ABS und MBS. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen.

Weiterhin bevorzugt sind Suspensions- und Massepolymere, sowie Emulsionspolymere.

Als chlorhaltiges Polymerisat ist Polyvinylchlorid besonders bevorzugt, insbesondere Suspensionspolymerisat und Massepolymerisat.

Bevorzugt sind Stabilisatorzusammensetzungen, wie oben beschrieben, enthaltend als a) eine Verbin-

dung der Formel $(R_aSnO_b)_c$ (I), wobei R $C_4$-$C_{12}$-Alkyl bedeutet; a die Zahl 1 oder 2; b = (4-a)/2; und c grösser oder gleich 1 ist. Besonders bevorzugt bedeutet R $C_4$- oder $C_8$-Alkyl. Bevorzugt sind auch Mischungen von Verbindungen der Formeln $R_2SnO$ (II) und $(RSnO)_2O$ (III), wobei R $C_1$-$C_{18}$-Alkyl, bevorzugt $C_4$-$C_{12}$-Alkyl, bedeutet. In den bevorzugten Mischungen von Verbindungen der Formeln (II) und (III) überschreitet der Anteil der Verbindung der Formel (III) an der Mischung 20 Gew.-% nicht.

Zweckmässig sind Stabilisatorzusammensetzungen, wie oben beschrieben, enthaltend als b) mindestens eine Perchlorat-Verbindung einwertiger Metalle, z.B. der Alkalimetalle, darunter Li-, Na- und $KClO_4$, oder eine Perchlorat-Verbindung zweiwertiger Metalle, z.B. der Metalle der 2. Haupt- oder Nebengruppe des Periodensystems wie Zn-, Ca-, Sr-, Mg- und $Ba(ClO_4)_2$.

Die erfindungsgemäße Stabilisatorzusammensetzung enthält als Komponente b) bevorzugt Kalium-, Natrium-, Barium-, Calcium- oder Magnesium-perchlorat oder eine Mischung dieser Stoffe.

Bevorzugte Stabilisatorzusammensetzungen enthalten 70-95 Gew.-% einer Verbindung der Formel (II), 0-10 Gew.-% einer Verbindung der Formel (III) und 5-20 Gew.-% einer Perchlorat-Verbindung eines ein- oder zweiwertigen Metalles, bevorzugt ein Alkaliperchlorat.

Ein weiterer Gegenstand der vorliegenden Erfindung sind stabilisierte chlorhaltige Polymerzusammensetzungen, enthaltend, ein chlorhaltiges Polymer,

a) mindestens eine Verbindung der Formel (I) und

b) mindestens eine Perchlorat-Verbindung eines ein- oder zweiwertigen Metalles.

Bevorzugt sind stabilisierte chlorhaltige Polymerzusammensetzungen, enthaltend,

a) 0,1 bis 4 Gew.-Teile einer Verbindung der Formel (I),

b) 0,01 bis 1 Gew.-Teil einer Perchlorat-Verbindung eines ein- oder zweiwertigen Metalles

und 100 Gew.-Teile chlorhaltiges Polymer.

Der bevorzugte Mengenbereich für die Verbindung der Formel (I) in der Polymerzusammensetzung ist 0,1 bis 2,5 Gew.-Teile, bezogen auf 100 Gew.-Teile chlorhaltiges Polymer. Der bevorzugte Mengenbereich für eine Mischung der Verbindung der Formeln (II) und (III) in der Polymerzusammensetzung ist 0,1 bis 2,5 Gew.-Teile einer Verbindung der Formel (II) und 0 bis 0,2 Gew.-Teile einer Verbindung der Formel (III), jeweils bezogen auf 100 Gew.-Teile chlorhaltiges Polymer

Der bevorzugte Mengenbereich für die Perchlorat-Verbindung eines ein- oder zweiwertigen Metalles in der Polymerzusammensetzung ist 0,05 bis 1 Gew.-Teil, bezogen auf 100 Gew.-Teile chlorhaltiges Polymer.

Eine bevorzugte Stabilisatorzusammensetzung enthält somit beispielsweise 85 Teile $(C_8H_{17})_2SnO$, 2,5 Teile $(C_8H_{17}SnO)_2O$ und 12 Teile Natriumperchlorat.

Bevorzugt sind auch Stabilisator- bzw. Polymerzusammensetzungen, welche neben einer Verbindung der Formel (I) und einer Perchlorat-Verbindung eine Verbindung aus der Reihe der kristallinen Alkali-/Erdalkali-alumosilikate enthalten, wobei Zeolithe bevorzugt sind.

Zeolithe können durch die allgemeine Formel (X)

$$M_{x/n}[(AlO_2)_x(SiO_2)_y]\cdot wH_2O \qquad (X)$$

wobei n die Ladung des Kations M;
M ein Element der ersten oder zweiten Hauptgruppe, wie Li, Na, K, Mg, Ca, Sr oder Ba;
y : x eine Zahl zwischen 0,8 und 15, bevorzugt zwischen 0,8 und 1,2; und
w eine Zahl zwischen 0 und 300, bevorzugt zwischen 0,5 und 10, ist,
beschrieben werden.

Weiter sind verwendbare Zeolithe aus "Atlas of Zeolite Structure Types", W.M. Meier und D.H. Olson, Verlag Butterworths, 3. Auflage 1992 bekannt.

Bevorzugt sind auch Stabilisator- bzw. Polymerzusammensetzungen, welche neben einer Verbindung der Formel (I) und einer Perchlorat-Verbindung eine Verbindung aus der Reihe der Hydrotalcite enthalten.

Verbindungen aus der Reihe der Hydrotalcite können durch die allgemeine Formel (B),

$$M^{2+}_{1-x}\bullet M^{3+}_{x}\bullet(OH)_2\bullet(A^{n-})_{x/n}\bullet mH_2O \qquad (B)$$

wobei

| | |
|---|---|
| $M^{2+}$ | = Mg, Ca, Sr, Ba, Zn, Cd, Pb, Sn und/oder Ni ist, |
| $M^{3+}$ | = Al, B oder Bi ist, |
| $A^{n-}$ | ein Anion mit der Valenz n darstellt, |
| n | eine Zahl von 1-4 ist, |
| x | eine Zahl von 0-0,5 ist, und |
| m | eine Zahl von 0-2 ist. |
| $A^{n-}$ | ist bevorzugt $OH^-$, $Cl^-$, $Br^-$, $I^-$, $ClO_4^-$, $HCO_3^-$, $CH_3COO^-$, $C_6H_5COO^-$, $CO_3^{2-}$, $SO_4^{2-}$, |

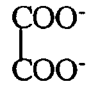,

$(CHOHCOO)_2^{2-}$, $(CHOH)_4CH_2OHCOO^-$. $C_2H_4(COO)_2^{2-}$, $(CH_2COO)_2^{2-}$, $CH_3CHOHCOO^-$, $SiO_3^{2-}$, $SiO_4^{4-}$, $Fe(CN)_6^{3-}$, $Fe(CN)_6^{4-}$ oder $HPO_4^{2-}$.

Andere Hydrotalcite, die zweckmässig eingesetzt werden können, sind Verbindungen mit der allgemeinen Formel (C),

$$M_x^{2+}Al_2(OH)_{2x+6nz}(A^{n-})_2 \bullet mH_2O \qquad (C)$$

wobei in vorliegender Formel (C) $M^{2+}$ wenigstens ein Metall aus der Reihe von Mg und Zn darstellt und Mg bevorzugt ist, $A^{n-}$ ein Anion, beispielsweise aus der Reihe von $CO_3^{2-}$,

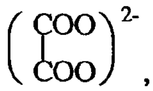,

$OH^-$ und $S^{2-}$ darstellt, wobei n die Valenz des Anions ist, m eine Positive Zahl. vorzugsweise von 0,5 bis 5, darstellt und x und z positive Zahlen darstellen, wobei x vorzugsweise 2 bis 6 ist und z kleiner als 2 ist.

Bevorzugt sind Verbindungen aus der Reihe der Hydrotalcite der allgemeinen Formel (B),

$$M^{2+}_{1-x} \bullet M^{3+}_x \bullet (OH)_2 \bullet (A^{n-})_{x/n} \bullet mH_2O \qquad (B)$$

wobei $M^{2+}$ die Bedeutung von Mg oder einer festen Lösung von Mg und Zn hat, $A^{n-}$ für $CO_3^{2-}$ steht, x eine Zahl von 0 bis 0,5 ist und m eine Zahl von 0 bis 2 ist.

Ganz besonders bevorzugt sind Hydrotalcite der Formeln

$Al_2O_3 \cdot 6MgO \cdot CO_2 \cdot 12H_2O$,
$Mg_{4,5}Al_2(OH)_{13} \cdot CO_3 \cdot 3,5H_2O$,
$4MgO \cdot Al_2O_3 \cdot CO_2 \cdot 9H_2O$,
$4MgO \cdot Al_2O_3 \cdot CO_2 \cdot 6H_2O$,
$ZnO \cdot 3MgO \cdot Al_2O_3 \cdot CO_2 \cdot 8\text{-}9H_2O$ oder
$ZnO \cdot 3MgO \cdot Al_2O_3 \cdot CO_2 \cdot 5\text{-}6H_2O$.

Finden weitere Stabilisatoren aus der Reihe der organischen oder anorganischen Zn-, Ca-, Ba-, Mg- oder Pb-Verbindungen, wie beispielsweise Fettsäuresalze, Anwendung, so können beispielsweise 0 bis 10 Gew.-Teile, bezogen auf die Polymerzusammensetzung, eingesetzt werden. Zweckmässig sind 0,05 bis 5 Gew.-Teile, bevorzugt 0,1 bis 5 Gew.-Teile.

Die im Rahmen der Erfindung verwendbaren Epoxidverbindungen können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten wenigstens einen Epoxyrest, insbesondere solche der Formel A

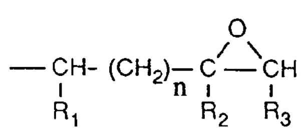, (A)

wobei dieser direkt an Kohlenstoff, Sauerstoff-, Stickstoff- oder Schwefelatome gebunden ist, worin $R_1$ und $R_3$ beide Wasserstoff sind, $R_2$ Wasserstoff oder Methyl und n = 0 ist, oder worin $R_1$ und $R_3$ zusammen $-CH_2-CH_2-$ oder $-CH_2-CH_2-CH_2-$ bedeuten, $R_2$ dann Wasserstoff und n = 0 oder 1 ist.

Beispielhaft für Epoxidverbindungen sind zu erwähnen:

I) Glycidyl- und β-Methylglycidylester erhältlich durch Umsetzung einer Verbindung mit mindestens einer Carboxylgruppe im Molekül und Epichlorhydrin bzw. Glycerindichlorhydrin bzw. β-Methyl-epichlorhydrin. Die Umsetzung erfolgt zweckmässig in der Gegenwart von Basen.

Als Verbindungen mit mindestens einer Carboxylgruppe im Molekül können aliphatische Carbonsäuren verwendet werden. Beispiele für diese Carbonsäuren sind Glutarsäure, Adipinsäure, Pimelinsäure, Korksäure, Azelainsäure, Sebazinsäure oder dimerisierte bzw. trimerisierte Linolsäure, Acryl- und Methacrylsäure,

Capron-, Capryl-, Laurin-, Myristin-, Palmitin-, Stearin- und Pelargonsäure.

Es können aber auch cycloaliphatische Carbonsäuren eingesetzt werden, wie beispielsweise Cyclohexancarbonsäure, Tetrahydrophthalsäure, 4-Methyltetrahydrophthalsäure, Hexahydrophthalsäure oder 4-Methylhexahydrophthalsäure.

Weiterhin können aromatische Carbonsäuren Verwendung finden, wie beispielsweise Benzoesäure, Phthalsäure, Isophthalsäure, Trimellithsäure oder Pyromellithsäure.

Ebenfalls können auch carboxylterminierte Addukte, z.B. von Trimellithsäure und Polyolen, wie beispielsweise Glycerin oder 2,2-Bis-(4-hydroxycyclohexyl)-propan verwendet werden.

Weitere im Rahmen dieser Erfindung verwendbare Epoxidverbindungen finden sich in der EP 0 506 617.

II) Glycidyl- oder (β-Methylglycidyl)-ether erhältlich durch Umsetzung einer Verbindung mit mindestens einer freien alkoholischen Hydroxygruppe und/oder phenolischen Hydroxygruppe und einem geeignet substituierten Epichlorhydrin unter alkalischen Bedingungen, oder in Anwesenheit eines sauren Katalysators und anschliessender Alkalibehandlung.

Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethy len)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen, Butanol, Amylalkohol, Pentanol, sowie von monofunktionellen Alkoholen wie Isooctanol, 2-Ethylhexanol, Isodecanol sowie $C_7$-$C_9$-Alkanol- und $C_9$-$C_{11}$-Alkanolgemischen.

Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.

Die Epoxidverbindungen können sich auch von einkernigen Phenolen ableiten, wie beispielsweise von Phenol, Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

Weitere mögliche endständige Epoxide sind beispielsweise: Glycidyl-1-naphthylether, Glycidyl-2-phenylphenylether, 2-Biphenylglycidylether, N-(2,3-epoxypropyl)-phthalimid und 2,3-Epoxypropyl-4-methoxyphenylether.

III) (N-Glycidyl)-Verbindungen erhältlich durch Dehydrochlorierung der Reaktionsprodukte von Epichlorhydrin mit Aminen, die mindestens ein Aminowasserstoffatom enthalten. Bei diesen Aminen handelt es sich zum Beispiel um Anilin, N-Methylanilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.

Zu den (N-Glycidyl)-Verbindungen zählen aber auch N,N'-Di-, N,N',N''-Tri- und N,N',N'',N'''-Tetraglycidylderivate von Cycloalkylenharnstoffen, wie Ethylenharnstoff oder 1,3-Propylenharnstoff, und N,N'-Diglycidylderivate von Hydantoinen, wie von 5,5-Dimethylhydantoin oder Glykoluril und Triglycidylisocyanurat.

IV) S-Glycidyl-Verbindungen, wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel A, worin $R_1$ und $R_3$ zusammen $-CH_2-CH_2-$ bedeuten und n 0 ist, sind Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel A, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methylcyclohexyl)-methylester.

Weitere verwendbare Epoxyverbindungen, wie epoxidiertes Sojabohnenöl, werden beispielsweise in "Plastics Additives", Herausgeber H. Gächter und H. Müller, Hanser Verlag, 3. Auflage, 1990, Seiten 303/4 und US 3,928,267 beschrieben.

Die erfindungsgemässen Zusammensetzungen können auch weitere, für chlorhaltige Thermoplasten übliche Stabilisatoren enthalten. So enthalten sie beispielsweise 0-3 Teile, bezogen auf die Polymerzusammensetzung, insbesondere 0-1,5, vor allem 0-1 Teile eines oder mehrerer Phosphite. Solche Phosphite können etwa in einer Menge von 0,01-3, insbesondere 0,01-1,5, z.B. 0,01-1, bevorzugt 0,1-0,6, z.B. 0,2-0,5 Teilen enthalten sein.

Beispiele für derartige Phosphite sind etwa solche der Formeln

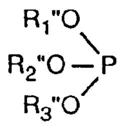

und

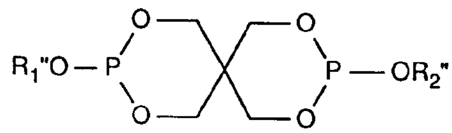

worin R[1]", R[2]" und R[3]" gleich oder verschieden sind und $C_6$-$C_{18}$-Alkyl, $C_6$-$C_{18}$-Alkenyl, einen substituierten oder unsubstituierten Phenylrest oder $C_5$-$C_7$-Cycloalkyl bedeuten.

Bedeuten R[1]", R[2]" und R[3]" $C_6$-$C_{18}$-Alkyl, so handelt es sich dabei z.B. um n-Hexyl, n-Octyl, n-Nonyl, Decyl, Dodecyl, Tetradecyl, Hexadecyl oder Octadecyl. Bevorzugt sind Alkylgruppen mit 8 bis 18 C-Atomen.

Als substituiertes Phenyl bedeuten R[1]", R[2]" und R[3]" beispielsweise Tolyl, Ethylphenyl, Xylyl, Cumyl, Cymyl, Kresyl, 4-Methoxyphenyl, 2,4-Di-methoxyphenyl, Ethoxyphenyl, Butoxyphenyl, p-n-Octylphenyl, p-n-Nonylphenyl oder p-n-Dodecylphenyl.

Besonders geeignete Phosphite sind Trioctyl-, Tridecyl-, Tridodecyl-, Tritetradecyl, Tristearyl-, Trioleyl-, Triphenyl-, Trikresyl-, Tris-p-nonylphenyl- oder Tricyclohexylphosphit und besonders bevorzugt sind die Aryl-Dialkyl- sowie die Alkyl-Diaryl-Phosphite, wie z.B. Phenyldidecyl-, (2,4-Di-tert.-butylphenyl)-di-dodecylphosphit, (2,6-Di-tert.-butylphenyl)-di-dodecylphosphit und die Dialkyl-und Diaryl-pentaerythrit-diphosphite, wie Distearylpentaerythrit-diphosphit.

Bevorzugte organische Phosphite sind Distearyl-pentaerythrit-diphosphit, Trisnonylphenylphosphit und Phenyl-didecyl-phosphit.

Ferner können in den erfindungsgemässen Zusammensetzungen weitere bekannte Costabilisatoren enthalten sein, beispielsweise 0-2, insbesondere 0-1,5 Teile, bezogen auf die Polymerzusammensetzung. Sie sind dann vorzugsweise in einer Menge von 0,01-2, insbesondere 0,05-1,5, z.B. 0,1-1, vor allem 0,1-0,5 Teilen vorhanden. Als derartige Costabilisatoren seien 1,3-Diketone, Aminocrotonsäureester, Dehydracetsäure, 2,4-Dihydroxybenzophenon, 2,4-Dihydroxy-4'-tert.-butylbenzophenon Dihydropyridin-Derivate und Pyrrolderivate genannt.

Zweckmässig sind 1,3-Diketone der allgemeinen Formel (IV) oder (IVa),

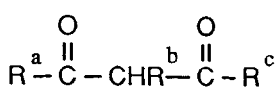

(IV),

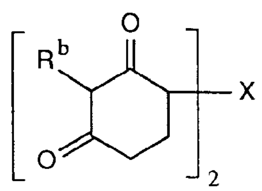

(IVa)

wobei

$R^a$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe -OH, $C_1$-$C_4$-Alkyl, $C_1$- bis $C_4$-Alkoxy oder Halogen substituiertes Phenyl, Phenyl-$C_1$-$C_4$-alkyl, eine Gruppe der Formel

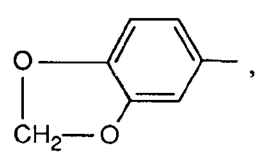

,

Cycloalkyl mit 5 bis 12 Ring-C-Atomen, oder mit 1 bis 3 $C_1$-$C_4$-Alkylgruppen substituiertes Cycloalkyl mit 5 bis 12 Ring-C-Atomen bedeutet,

$R^c$ Alkyl mit 1 bis 22 C-Atomen, $C_5$-$C_{10}$-Hydroxyalkyl, Alkenyl mit 2 bis 22 C-Atomen, Phenyl, mit 1 bis 3 Gruppen der Reihe -OH, $C_1$-$C_4$-Alkyl, $C_1$- bis $C_4$-Alkoxy oder Halogen substituiertes Phenyl oder Phenyl-$C_1$-$C_4$-alkyl, eine Gruppe der Formel

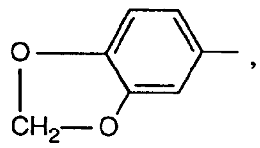

Cycloalkyl mit 5 bis 12 Ring-C-Atomen,
oder mit 1 bis 3 $C_1$ bis $C_4$-Alkylgruppen substituiertes Cycloalkyl mit 5 bis 12 Ring-C-Atomen bedeutet,

$R^b$ -H, Alkyl mit 1 bis 18 C-Atomen, Alkenyl mit 2 bis 12 C-Atomen, Phenyl, $C_1$-$C_4$-Alkyl substituiertes Phenyl, Phenyl-$C_1$-$C_4$-alkyl, oder eine Gruppe der Formel

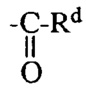

bedeutet,
wobei $R^d$ $-CH_3$, $-C_2H_5$ oder Phenyl darstellt, oder worin

$R^a$ und $R^b$ zusammen die Bedeutung eines Tetramethylenrestes oder eines Tetramethylenrestes, der mit einem Benzorest anelliert ist, aufweisen oder

$R^a$ und $R^c$ zusammen die Bedeutung eines Trimethylenrestes oder eines mit 1 bis 3 $C_1$-$C_4$-Alkylgruppen substituierten Trimethylenrestes aufweisen, und X Alkylen mit 1-4 C-Atomen bedeutet.

$R^a$ und $R^c$ als Alkyl mit 1 bis 22 C-Atomen kann beispielsweise Methyl, Ethyl, Propyl, n-Butyl, tert.-Butyl, Pentyl, Hexyl, 2-Ethylhexyl, Nonyl, Decyl, Undecyl, Dodecyl, Tridecyl, Octadecyl oder Eicosyl sein, $R^b$ als Alkyl mit 1 bis 18 C-Atomen kann beispielsweise obige Bedeutung ohne Eicosyl haben.

Beispiele von $C_5$-$C_{10}$-Hydroxyalkyl für $R^a$ und $R^c$ sind 5-Hydroxypentyl, 6-Hydroxyethyl oder 7-Hydroxyheptyl.

Beispiele für $R^a$ und $R^c$ als Alkenyl mit 2 bis 22 C-Atomen sind Vinyl, Propenyl, Allyl, Butenyl, Methallyl, Hexenyl, Decenyl oder Heptadecenyl. Entsprechende Beispiele für $R^b$ als Alkenyl mit 2 bis 12 C-Atomen lassen sich sinngemäss obiger Aufzählung entnehmen.

Bei den Phenylgruppen, die mit vorzugsweise ein bis drei Gruppen aus der Reihe -OH, $C_1$-$C_4$-Alkyl, $C_1$-$C_4$-Alkoxy oder Halogen substituiert sind, wie für $R^a$ und $R^c$ erwähnt, kann es sich um 4-Hydroxyphenyl-, um 4-Hydroxy-3,5-di-$C_1$-$C_4$-alkylphenyl, wobei $C_1$-$C_4$-Alkyl beispielsweise Methyl oder t-Butyl ist, um Methylphenyl, Dimethylphenyl, Ethylphenyl, n-Butylphenyl, tert.-Butylphenyl, Methyl-tert.-butylphenyl, di-tert.-Butylphenyl, um Methoxy oder Ethoxyphenyl oder um Monochlorphenyl handeln.

Bedeutet $R^b$ $C_1$-$C_4$-Alkyl substituiertes Phenyl so sind damit z.B. Methylphenyl, Ethylphenyl oder tert.-Butylphenyl umfasst.

Die Bedeutung von Phenyl-$C_1$-$C_4$-alkyl für $R^a$, $R^b$ und $R^c$ ist beispielsweise Benzyl oder Methylbenzyl.

$R^a$ und $R^c$ können auch Cycloalkyl mit 5 bis 12 Ring-C-Atomen oder mit 1 bis 3 $C_1$-$C_4$-Alkylgruppen substituietes Cycloalkyl mit 5 bis 12 Ring-C-Atomen bedeuten. Beispiele dafür sind Cyclopentyl, Cyclohexyl, Cycloheptyl, Cyclobutyl, Cyclononyl, Cyclododecyl usw., sowie Methylcyclohexyl, Dimethylcyclohexyl, Trimethylcyclohexyl, tert.-Butylcyclohexyl.

Beispiele für 1,3-Diketone sind:

Dehydracetsäure, Dehydropropionylacetsäure, Dehydrobenzoylacetsäure, Cyclohexan-1,3-dion, Dimedon, 2,2'-Methylenebiscyclohexan-1,3-dion, 2-Benzylcyclohexan-1,3-dion, Acetyltetralon, Palmitoyltetralon, Stearoyltetralon, Benzoyltetralon, 2-Acetylcyclohexanon, 2-Benzoyl-cyclohexanon, 2-Acetyl-cyclohexane-1,3-dion, Benzoyl-p-chlorobenzoylmethan, Bis-(4-methylbenzoyl)methan, Bis-(2-hydroxybenzoyl)methan, Benzoylaceton, Tribenzoylmethan, Diacetylbenzoylmethan, Stearoylbenzoylmethan, Palmitoylbenzoylmethan, Lauroylbenzoylmethan, Dibenzoylmethan, 4-Methoxybenzoylbenzoylmethan, Bis-(4-methoxybenzoyl)methan, Bis-(4-chlorobenzoyl)methan, Bis-(3,4-methylenedioxybenzoyl)methan, Benzoyl- acetyloctylmethan, Benzoylacetylphenylmethan, Stearoyl-4-methoxy-benzoyl-methan, Bis-(4-t-butylbenzoyl)methan, Butanoylaceton, Heptanoylaceton, Distearoylmethan, Acetylaceton, Stearoylaceton, Palmitoylaceton, Lauroylaceton, Benzoylformylmethan, Benzoylphenylacetylmethan, Bis-(cyclohexan-(1,3)-dion-yl)methan oder Di-pivaloylmethan.

Als Costabilisatoren verwendbare 1,3-Diketoverbindungen sind insbesondere jene, die in der DE-B 2 600 516 und der EP-A 35 268 beschrieben sind, z.B. solche der im Patentanspruch der DE-B 2 600 516 angegebenen Formel. Bevorzugte 1,3-Diketoverbindungen sind Benzoylstearoyl-methan, 2-Benzoylacetessigsäurealkyl(z.B.

ethyl)-ester und Triacylmethane.

Als Aminocrotonsäureester kommen insbesondere die Ester mit einwertigen geradkettigen $C_8$-$C_{20}$-, insbesondere $C_{12}$-$C_{18}$-Alkoholen und/oder mit 1,3- bzw. 1,4-Butandiol und/oder 1,2-Dipropylenglykol und/oder Thiodiethylenglykol in Betracht.

Als Pyrrol-Costabilisatoren sind jene besonders zu erwähnen, die in der EP-A 22 087 und der GB-A 2 078 761 beschrieben sind, z.B. der dort angegebenen Formel I, vorzugsweise jene Pyrrolderivate, die in den Ansprüchen 2-9 der EP-A 22 087 definiert sind. Als Beispiel sei 2-Methyl-3-cyclohexyloxycarbonyl-4-phenyl-1H-pyrrol genannt.

Andere Stabilisatoren, die in den erfindungsgemässen Zusammensetzungen angewendet werden können, sind Polyole. Die anzuwendenden Mengen sind beispielsweise bis zu 3 Gew.-Teile, bezogen auf 100 Gew.-Teile Polymerzusammensetzung, zweckmässig bis zu 2 Gew.-Teilen und vorzugsweise 0,01 bis 1 Gew.-Teil. Typische Beispiele von Polyolen sind Pentaerythrit, Dipentaerythrit, Trimethylolpropan, Ditrimethylolpropan, Tris-(2-hydroxyethyl)isocyanurat (THEIC), wobei letzteres bevorzugt ist, Sorbit, Mannit und Inosit.

Ferner können die erfindungsgemässen Zusammensetzungen übliche Pigmente, Antioxidantien, Lichtstabilisatoren und UV-Absorber enthalten.

Ein weiterer Gegenstand der vorliegenden Erfindung ist ein Verfahren zum Stabilisieren von chlorhaltigen Polymeren. Hierzu wird in der Regel die Stabilisatorzusammensetzung, enthaltend die Komponenten a) und b) sowie gegebenenfalls weitere Zusätze, in das Polymer eingearbeitet, wozu sich an sich bekannte Vorrichtungen, wie Kalander, Mischer, Kneter und dergleichen, anbieten. Die Komponenten a) und b) der erfindungsgemäßen Stabilisatorzusammensetzung sowie optionale Zusätze können den zu stabilisierenden Polymeren auch einzeln oder in Form eines Masterbatches zugesetzt werden. Bevorzugte Komponenten a) und b), bevorzugte Mengenverhältnisse und die weiteren möglichen Zusätze ergeben sich aus den vorstehenden Erläuterungen zu der erfindungsgemässen Stabilisator- bzw. Polymerzusammensetzung.

Die nach vorliegender Erfindung stabilisierten Zusammensetzungen können auf bekannte Weisen in die gewünschte Form gebracht werden. Solche Verfahren sind beispielsweise Kalandrieren, Extrudieren, Spritzgiessen oder Sintern, ferner Extrusions-Blasen oder eine Verarbeitung nach dem Plastisol-Verfahren. Die Zusammensetzungen können auch zu Schaumstoffen verarbeitet werden.

Bevorzugte stabilisierte chlorhaltige Polymerzusammensetzungen sind weichmacherfreie oder im wesentlichen weichmacherfreie Zusammensetzungen.

Ein weiterer Gegenstand der vorliegenden Erfindung ist die Verwendung der stabilisierten Polymerzusammensetzungen insbesondere, in Form von Hart-Rezepturen, für Hohlkörper (Flaschen), Verpackungsfolien (Tiefziehfolien), Blasfolien, Crash pad-Folien (Automobile), Rohre, Schaumstoffe, Schwerprofile (Fensterrahmen), Lichtwandprofile, Bauprofile, Sidings, Fittings und Apparatur-Gehäuse (Computer, Haushalteräte).

Andere Zusammensetzungen, in Form von Weich-Rezepturen sind für Drahtummantelungen, Kabelisolierungen, Dekorationsfolien, Dachfolien, Schaumstoffe, Agrarfolien, Schläuche, Dichtungsprofile, Bürofolien und Folien für Traglufthallen geeignet.

Beispiele für die Anwendung der erfindungsgemässen Zusammensetzungen als Plastisole sind Kunstleder, Fussböden, Textilbeschichtungen, Tapeten, Coil-Coatings und Unterbodenschutz für Kraftfahrzeuge.

Bevorzugt wird die Verwendung der oben beschriebenen Polymerzusammensetzungen als Werkstoff auf Basis von Hart-PVC für Aussenanwendungen und als Hartfolien oder als Tiefziehfolien für Kfz-Innenraumauskleidungen.

Die nachfolgenden Beispiele erläutern die Erfindung näher. Alle Angaben in Teilen und Prozenten beziehen sich, wie auch in der übrigen Beschreibung, auf das Gewicht, sofern nicht anders angegeben.

Beispiel 1:

Verschiedene PVC-Zusammensetzungen werden durch Vermischen der einzelnen Komponenten gemäss nachfolgender Tabelle hergestellt (Mengenangaben in Gew.-Teilen).

Tabelle 1:

| Beispiel: | Vergleich 1 | Vergleich 2 | 1 |
|---|---|---|---|
| S-PVC (K-Wert 60) | 100,0 | 100,0 | 100,0 |
| Impactmodifier (Acrylat) | 6,0 | 6,0 | 6,0 |
| Wachsester | 1,2 | 1,2 | 1,2 |
| Dicarbonsäureester | 1,0 | 1,0 | 1,0 |
| Fliesshilfe (acrylatmodifiziert) | 1,0 | 1,0 | 1,0 |
| **Di-n-octylzinnoxid** | **0,8** | **---** | **0,8** |
| **$NaClO_4$** | **---** | **0,07** | **0,07** |

Die PVC-Zusammensetzungen werden 5 min bei 190°C auf einem Mischwalzwerk plastifiziert. Aus der so erhaltenen Folie (Stärke 0,2 mm) werden Prüfmuster ausgestanzt und in einem Mathis-Thermo-Takter-Ofen bei 190°C für die in Tabelle 2 angegebene Zeit thermisch belastet. Anschliessend wird der Yellowness-Index (YI) nach ASTM 1925-70 bestimmt. Die Ergebnisse der untenstehenden Tabelle 2 zeigen eine deutliche Verbesserung der Stabilität bei der erfindungsgemässen Probe. Ein höherer YI-Wert zeigt eine stärkere Verfärbung an.

Tabelle 2:

| YI der Probekörper nach Belastung bei 190°C | | | | | | |
|---|---|---|---|---|---|---|
| | 0 | 10 | 20 | 30 | 40 | 50 [min] |
| Vergleich 1 | 84,4 | 87,9 | 111,5 | 136,1 | Zersetzung | |
| Vergleich 2 | >130 Zersetzung beim Walzen | | | | | |
| **Beispiel 1** | **55,1** | **57,3** | **66,2** | **88,5** | **97,3** | **103,6** |

## Patentansprüche

1. Stabilisatorzusammensetzung für chlorhaltige Polymere, enthaltend
   a) mindestens eine organische Zinnoxidverbindung der Formel
   $$(R_aSnO_b)_c \qquad (I),$$
   wobei R $C_1$-$C_{18}$-Alkyl bedeutet; a die Zahl 1 oder 2; b = (4-a)/2;
   und c grösser oder gleich 1 ist;
   und
   b) mindestens eine Perchlorat-Verbindung eines ein- oder zweiwertigen Metalles.

2. Stabilisatorzusammensetzung nach Anspruch 1, enthaltend als Komponente a) eine Verbindung der Formel (I), worin R $C_4$-$C_{12}$-Alkyl bedeutet.

3. Stabilisatorzusammensetzung nach Anspruch 1, enthaltend als Komponente a) eine Mischung von Verbindungen der Formeln $R_2SnO$ (II) und $(RSnO)_2O$ (III), worin R $C_1$-$C_{18}$-Alkyl bedeutet.

4. Stabilisatorzusammensetzung nach Anspruch 1, enthaltend als Komponente b) Kalium-, Natrium-, Barium-, Calcium- oder Magnesiumperchlorat oder eine Mischung dieser Stoffe.

5. Stabilisatorzusammensetzung nach Anspruch 1, enthaltend,
   70-95 Gew.-% einer Verbindung der Formel (II),
   0-10 Gew.-% einer Verbindung der Formel (III) und
   5-20 Gew.-% einer Perchlorat-Verbindung eines ein- oder zweiwertigen Metalles.

**6.** Stabilisierte chlorhaltige Polymerzusammensetzung enthaltend, ein chlorhaltiges Polymer,
a) 0,1 bis 4 Gew.-Teile mindestens einer organischen Zinnoxidverbindung der Formel

$$(R_aSnO_b)_c \qquad (I),$$

wobei R $C_1$-$C_{18}$-Alkyl bedeutet; a die Zahl 1 oder 2; b = (4-a)/2;
und c grösser oder gleich 1 ist; und
b) 0,01 bis 1 Gew.-Teil mindestens einer Perchlorat-Verbindung eines ein- oder zweiwertigen Metalles.

**7.** Stabilisierte chlorhaltige Polymerzusammensetzung gemäss Anspruch 6 enthaltend,
a) 0,1 bis 4 Gew.-Teile mindestens einer organischen Zinnoxidverbindung der Formel

$$(R_aSnO_b)_c \qquad (I),$$

wobei R $C_1$-$C_{18}$-Alkyl bedeutet; a die Zahl 1 oder 2; b = (4-a)/2;
und c grösser oder gleich 1 ist;
b) 0,01 bis 1 Gew.-Teil mindestens einer Perchlorat-Verbindung eines ein- oder zweiwertigen Metalles;
und 100 Gew.-Teile chlorhaltiges Polymer.

**8.** Stabilisierte chlorhaltige Polymerzusammensetzung gemäss Anspruch 6 enthaltend,
a) 0,1 bis 2,5 Gew.-Teile mindestens einer organischen Zinnoxidverbindung der Formel

$$(R_aSnO_b)_c \qquad (I),$$

wobei R $C_1$-$C_{18}$-Alkyl bedeutet; a die Zahl 1 oder 2; b = (4-a)/2;
und c grösser oder gleich 1 ist;
b) 0,05 bis 1 Gew.-Teil mindestens einer Perchlorat-Verbindung eines ein- oder zweiwertigen Metalles;
und 100 Gew.-Teile chlorhaltiges Polymer.

**9.** Stabilisierte chlorhaltige Polymerzusammensetzung nach Anspruch 6, worin das chlorhaltige Polymer Polyvinylchlorid ist oder dieses enthält.

**10.** Verfahren zum Stabilisieren von chlorhaltigen Polymeren, dadurch gekennzeichnet, dass man zu dem chlorhaltigen Polymer
a) mindestens eine organische Zinnoxidverbindung der Formel

$$(R_aSnO_b)_c \qquad (I),$$

wobei R $C_1$-$C_{18}$-Alkyl bedeutet; a die Zahl 1 oder 2; b = (4-a)/2;
und c grösser oder gleich 1 ist;
und
b) mindestens eine Perchlorat-Verbindung eines ein- oder zweiwertigen Metalles zugibt.

**11.** Verwendung einer stabilisierten chlorhaltigen Polymerzusammensetzung auf Basis von Hart-PVC nach Anspruch 6 als Werkstoff für Aussenanwendungen oder als Tiefziehfolien.

Europäisches Patentamt

# EUROPÄISCHER RECHERCHENBERICHT

Nummer der Anmeldung
EP 94 81 0701

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
| A | CA-A-2 096 490 (CIBA GEIGY)<br>* Seite 2, Absatz 3 - Seite 3, Absatz 1 *<br>* Anspruch 1 *<br>--- | 1 | C08K13/02<br>//(C08K13/02, 3:16,5:57) |
| A | DATABASE WPI<br>Derwent Publications Ltd., London, GB;<br>AN 89-319264<br>& JP-A-1 236 252 (SANKYO ORGANIC CHEM KK)<br>21. September 1989<br>* Zusammenfassung *<br>----- | 1 | |
| | | | RECHERCHIERTE SACHGEBIETE (Int.Cl.6) |
| | | | C08K |

Der vorliegende Recherchenbericht wurde für alle Patentansprüche erstellt

| Recherchenort | Abschlußdatum der Recherche | Prüfer |
|---|---|---|
| DEN HAAG | 17. März 1995 | Siemens, T |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P04C03)